# EUROPÄISCHE PATENTANMELDUNG

(11) **EP 2 351 633 A2**
(43) Veröffentlichungstag der Anmeldung: **03.08.2011**
(21) Anmeldenummer: 10015677.7
(22) Anmeldetag: 15.12.2010
(51) Int. Cl.: B25J 9/16

(54) **Verfahren zur Geschwindigkeitsoptimierung eines Roboters**

(30) Priorität: 22.12.2009 DE 102009060062
(71) Anmelder: Weber Maschinenbau GmbH Breidenbach, 35236 Breidenbach (DE)
(72) Erfinder:
(74) Vertreter: Manitz, Finsterwald & Partner GbR

(57) **Zusammenfassung**

Die Erfindung betrifft ein Verfahren zur Geschwindigkeitsoptimierung eines Roboters (10), welcher dazu ausgebildet ist, eine Vielzahl von aufeinander folgenden Produktumsetzvorgängen auszuführen, bei denen Produkte (12) aus einem Aufnahmebereich (14) in einen Ablagebereich (16) umgesetzt werden, wobei wenigstens ein erster Umsetzvorgang (24a), bei dem eine erste Art von Produkt (12) an einem ersten vorbestimmten Aufnahmeort (26a) des Aufnahmebereichs aufgenommen und an einem ersten vorbestimmten Ablageort (28a) des Ablagebereichs (16) abgelegt wird, wiederholt ausgeführt wird, bei welchem Verfahren eine Obergrenze für die zulässige kinematische Belastung des Roboters (10) definiert wird und die Geschwindigkeit, mit welcher der erste Umsetzvorgang (24a) ausgeführt wird, ausgehend von einer Ausgangsgeschwindigkeit, bei welcher die resultierende kinematische Belastung des Roboters jedenfalls unterhalb der definierten Obergrenze liegt, während einer Lernphase mit jeder Wiederholung des ersten Umsetzvorgangs (24a) bis zu einer optimalen Arbeitsgeschwindigkeit erhöht wird, bei welcher die resultierende kinematische Belastung zumindest annähernd der definierten Obergrenze entspricht. Die Erfindung betrifft auch einen Roboter mit einer Robotersteuerung zur Durchführung des Verfahrens.

## Beschreibung

Die Erfindung betrifft ein Verfahren zur Geschwindigkeitsoptimierung eines Roboters, welcher dazu ausgebildet ist, eine Vielzahl von aufeinander folgenden Produktumsetzvorgängen auszuführen, bei denen Produkte aus einem Aufnahmebereich in einen Ablagebereich umgesetzt werden, wobei wenigstens ein erster Umsetzvorgang, bei dem eine erste Art von Produkt an einem ersten vorbestimmten Aufnahmeort des Aufnahmebereichs aufgenommen und an einem ersten vorbestimmten Ablageort des Ablagebereichs abgelegt wird, wiederholt ausgeführt wird.

Roboter kommen heutzutage in den unterschiedlichsten Bereichen zum Einsatz, um unter anderem die Ergonomie von Arbeitsplätzen zu verbessern, personal einzusparen, schwere Lasten zu handhaben und/oder die Prozessgeschwindigkeit zu erhöhen.

Zur Erreichung einer höheren Prozessgeschwindigkeit müssen die Bewegungen eines Roboters mit maximaler Geschwindigkeit durchgeführt werden. Um dabei unnötig hohe kinematische Belastungen des Roboters zu vermeiden, sollten insbesondere die auftretenden Beschleunigungen und Drehmomente stets unterhalb jeweils zulässiger Grenzwerte gehalten werden.

Zu diesem Zweck ist es bekannt, zu erwartende kinematische Belastungen des Roboters anhand vorhandener Daten, wie beispielsweise der Bahnplanung, der Robotergeometrie, der bewegten Massen etc., im Vorfeld oder während einer jeweiligen Bewegung zu berechnen. Dabei gilt, dass die errechneten Belastungen zu keinem Zeitpunkt die zulässigen Grenzwerte überschreiten dürfen.

Diese Methode hat den Nachteil, dass relevante Daten, wie beispielsweise Massenschwerpunkte, Massenträgheiten etc., zuvor sehr genau bestimmt werden müssen. Darüber hinaus ist dieses Vorgehen sehr rechenintensiv. Um zu verhindern, dass der Berechnungsvorgang bereits für sich betrachtet eine geschwindigkeitsbegrenzende Einschränkung darstellt, sind hohe Rechenleistungen erforderlich.

Alternative Lösungswege sehen davon ab, die im Betrieb auftretenden kinematischen Belastungen des Roboters zu überwachen, was zwar hohe Arbeitsgeschwindigkeiten, dafür aber auch eine reduzierte Lebensdauer des Roboters zur Folge haben kann.

Der Erfindung liegt die Aufgabe zugrunde, die Arbeitsgeschwindigkeit eines Roboters zu optimieren, ohne dabei die Lebensdauer des Roboters zu reduzieren.

Zur Lösung der Aufgabe ist ein Verfahren mit den Merkmalen des Anspruchs 1 vorgesehen.

Das erfindungsgemäße Verfahren dient der Geschwindigkeitsoptimierung eines Roboters, welcher dazu ausgebildet ist, eine Vielzahl von aufeinander folgenden Produktumsetzvorgängen auszuführen, bei denen Produkte aus einem Aufnahmebereich in einen Ablagebereich umgesetzt werden, wobei wenigstens ein erster Umsatzvorgang, bei dem eine erste Art von Produkt an einem ersten vorbestimmten Aufnahmeort des Aufnahmebereichs aufgenommen und an einem ersten vorbestimmten Ablageort des Ablagebereichs abgelegt wird, wiederholt ausgeführt wird.

Bei einem derartigen Roboter kann es sich beispielsweise um einen Deltaroboter handeln, wie er in der Lebensmittelindustrie eingesetzt wird, um Lebensmittelprodukte von einem ersten Transportband auf ein zweites Transportband oder in eine Verpackung umzusetzen. Grundsätzlich kommen aber auch andere Typen von Robotern in Betracht, wobei es auf die konkrete Ausgestaltung des Roboters letztlich nicht ankommt. Entscheidend ist vielmehr, dass der Roboter dazu dient, einen Umsetzvorgang oder mehrere Umsetzvorgänge in vielfacher Wiederholung auszuführen.

Der Ausdruck "Umsetzvorgang" bezeichnet in diesem Kontext einen vorbestimmten Verfahrweg des Roboters, der insbesondere durch den zugeordneten Aufnahme- und Ablageort definiert ist. So kann ein erster Umsetzvorgang beispielsweise durch einen ersten Aufnahmeort A 1 und einen ersten Ablageort B 1 definiert sein, während ein zweiter Umsetzvorgang durch einen zweiten Aufnahmeort A2 und einen zweiten Ablageort B2 definiert ist, wobei der zweite Aufnahmeort A2 mit dem ersten Aufnahmeort A1 identisch sein kann.

Bei dem erfindungsgemäßen Verfahren wird eine Obergrenze für die zulässige kinematische Belastung des Roboters definiert und die Geschwindigkeit, mit welcher der erste Umsetzvorgang ausgeführt wird, ausgehend von einer Ausgangsgeschwindigkeit, bei der die resultierende kinematische Belastung des Roboters jedenfalls unterhalb der definierten Obergrenze liegt, während einer Lernphase des Roboters mit jeder Wiederholung des ersten Umsetzvorgangs bis zu einer optimalen Geschwindigkeit erhöht, bei welcher die resultierende kinematische Belastung zumindest annähernd der definierten oberen Grenze entspricht.

Erfindungsgemäß ist es nicht erforderlich, die Masse und den Massenschwerpunkt eines umzusetzenden Produkts zu bestimmen und in Kenntnis des Verfahrweges und einer nicht zu überschreitenden Obergrenze für die kinematische Belastung aus diesen Daten eine maximal zulässige Arbeitsgeschwindigkeit zu berechnen. Vielmehr sieht die Erfindung nach jedem Neustart des Roboters eine Lernphase vor, während der der Roboter ausgehend von einer vergleichsweise langsamen Ausgangsgeschwindigkeit mit jeder Wiederholung eines Umsetzvorgangs schneller wird, bis er seine optimale Arbeitsgeschwindigkeit erreicht hat, bei welcher die resultierenden kinematischen Belastungen möglichst nahe an der definierten Belastungsobergrenze liegt, vorzugsweise ohne sie zu überschreiten. Der Roboter stellt sich während der Lernphase gewissermaßen also selber ein.

Im Ergebnis ermöglicht das erfindungsgemäße Verfahren also auf einfache Weise und insbesondere mit einem minimalen Rechenaufwand eine Maximierung der Arbeitsgeschwindigkeit eines Roboters, ohne dass dabei die Gefahr einer Überlastung der Robotermechanik besteht, durch welche die Lebensdauer des Roboters herabgesetzt würde. Die Erfindung führt somit zu einem besonders effizienten und verschleißarmen Betrieb eines Roboters, wodurch letztlich die Wirtschaftlichkeit des Roboters verbessert wird.

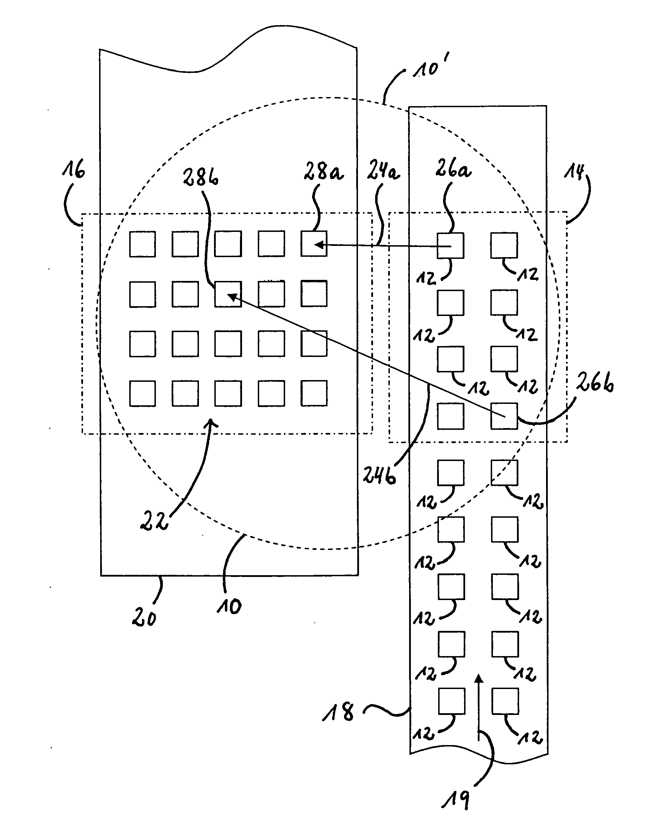

Vorteilhafte Ausbildungen der Erfindung sind den Unteransprüchen, der Beschreibung und der Zeichnung zu entnehmen.

Gemäß einer Ausführungsform wird ein zweiter Umsetzvorgang, bei dem eine zweite Art von Produkt an einem zweiten vorbestimmten Aufnahmeort des Aufnahmebereichs aufgenommen und an einem zweiten vorbestimmten Ablageort des Ablagebereichs abgelegt wird, wiederholt ausgeführt.

Dabei wird die Geschwindigkeit, mit welcher der zweite Umsetzvorgang ausgeführt wird, ausgehend von einer Ausgangsgeschwindigkeit, bei welcher die resultierende kinematische Belastung des Roboters jedenfalls unterhalb der definierten Obergrenze liegt, während einer Lernphase mit jeder Wiederholung des zweiten Umsetzvorgangs bis zu einer optimalen Geschwindigkeit erhöht, bei welcher die resultierende kinematische Belastung zumindest annähernd der definierten Obergrenze entspricht.

Mit anderen Worten ist nicht nur für den ersten Umsetzvorgang, sondern auch für den zweiten Umsetzvorgang und gegebenenfalls für weitere Umsetzvorgänge jeweils eine eigene Lernphase vorgesehen. Wie bereits erwähnt wurde, unterscheiden sich die verschiedenen Umsetzvorgänge in ihrem Aufnahmeort und/oder Ablageort. Außerdem können die erste Art von Produkt und die zweite Art von Produkt je nach Anwendung gleich oder unterschiedlich sein.

Vorteilhafterweise erfolgt die Erhöhung der Geschwindigkeit, mit welcher der zweite Umsetzvorgang ausgeführt wird, unabhängig von der Erhöhung der Geschwindigkeit, mit welcher der erste Umsetzvorgang ausgeführt wird. Allgemein gesprochen werden die Geschwindigkeiten verschiedener Umsetzvorgänge bevorzugt also unabhängig voneinander optimiert. Dies ermöglicht eine optimale Einstellung der Geschwindigkeit jedes einzelnen Umsetzvorgangs, was letztlich zu einer besonders effizienten und verschleißarmen Arbeitsweise des Roboters beiträgt und dessen Wirtschaftlichkeit noch weiter erhöht.

Um überprüfen zu können, ob die Geschwindigkeit eines Umsetzvorgangs bei seiner nächsten Wiederholung noch weiter erhöht werden kann, wird zumindest während der Lernphase eines Umsetzvorgangs die resultierende kinematische Belastung des Roboters ermittelt und mit der definierten Belastungsobergrenze verglichen. Hat die ermittelte kinematische Belastung die definierte Belastungsobergrenze erreicht, wird die Geschwindigkeit des Umsetzvorgangs nicht weiter erhöht und die Lernphase ist beendet.

Grundsätzlich ist es nach Beendigung der Lernphase, d.h. im stationären Betrieb des Roboters, nicht erforderlich, die resultierende kinematische Belastung nochmals zu ermitteln. Es ist aber durchaus denkbar, die während eines Umsetzvorgangs auftretende kinematische Belastung zu Kontrollzwecken zu einem späterem Zeitpunkt zu überprüfen, damit sichergestellt werden kann, dass der Roboter dauerhaft im optimalen Bereich arbeitet.

Vorzugsweise wird die resultierende kinematische Belastung aus relevanten Roboterparametern ermittelt, die während des jeweiligen Umsetzvorgangs erfasst werden. Wie bereits erwähnt wurde, ist zur Ermittlung der resultierenden kinematischen Belastung also keine Kenntnis der Masse oder des Massenschwerpunkts des umzusetzenden Produkts nötig, was dazu beiträgt, dass die Optimierung der Arbeitsgeschwindigkeit des Roboters mit einem minimalen Rechenaufwand auskommt.

Die relevanten Roboterparameter können beispielsweise umfassen: eine Maximalgeschwindigkeit eines zum Umsetzen des Produkts vorgesehenen beweglichen Teils des Roboters, eine Beschleunigung des beweglichen Teils, ein zur Bewegung des beweglichen Teils erforderliches Drehmoment und/oder eine Stromaufnahme eines Antriebs zur Bewegung des beweglichen Teils. Bei dem beweglichen Teil des Roboters kann es sich z.B. um einen verschwenkbaren Arm des Roboters handeln, an dem ein Werkzeug zum Greifen des Produkts angebracht ist.

Vorteilhafterweise werden die während eines Umsetzvorgangs erfassten relevanten Roboterparameter gespeichert und zumindest während der Lernphase des Umsetzvorgangs als Grundlage für die Erhöhung der Arbeitsgeschwindigkeit bei der nächsten Wiederholung des Umsetzvorgangs herangezogen. Um sicherzustellen, dass die definierte Belastungsobergrenze während der Lernphase zumindest nicht wesentlich überschritten wird, können maximal zulässige Grenzwerte für die einzelnen relevanten Roboterparameter definiert werden, die bei der Erhöhung der Geschwindigkeit eines Umsetzvorgangs einzuhalten sind.

Grundsätzlich ist es von Vorteil, wenn die Geschwindigkeit eines Umsetzvorgangs erhöht wird, indem die Maximalgeschwindigkeit und/oder Beschleunigung eines zum Umsetzen des Produkts vorgesehenen beweglichen Teils des Roboters gemäß einem vorbestimmten Schema erhöht werden bzw. wird. Denkbar ist hierbei eine Erhöhung in gleich bleibenden Schritten oder auch eine prozentuale Erhöhung.

Weiterer Gegenstand der Erfindung ist ein Roboter mit den Merkmalen des Anspruchs 10, insbesondere mit einer Robotersteuerung, die dazu ausgebildet ist, das erfindungsgemäße Verfahren auszuführen. Die voranstehend in Verbindung mit dem Verfahren beschriebenen Vorteile der Erfindung gelten für den Roboter folglich entsprechend.

Nachfolgend wird die Erfindung rein beispielhaft anhand einer vorteilhaften Ausführungsform unter Bezugnahme auf die beigefügte Zeichnung beschrieben.

Die einzige Figur zeigt eine Arbeitsstation mit einem Roboter 10, dessen Arbeitsgeschwindigkeit erfindungsgemäß optimierbar ist.

In diesem Beispiel handelt es sich bei dem Roboter 10, welcher rein schematisch durch seinen Aktionskreis 10' dargestellt ist, um einen Deltaroboter, wobei grundsätzlich auch andere Typen von Robotern in Betracht kommen. Der Roboter 10 dient dazu, Produkte 12 aus einem Aufnahmebereich 14 in einen Ablagebereich 16 umzusetzen.

Bei den Produkten 12 handelt es sich um Lebensmittelprodukte, beispielsweise um Portionen von Schinken-, Wurst- oder Käsescheiben, die in einer Schneidvorrichtung, z.B. einem Hochgeschwindigkeitsslicer, von einem beispielsweise stangenförmigen Produktlaib abgeteilt wurden und mittels einer Transportvorrichtung 18, z.B. einem Förderband, in einer durch den Pfeil 19 dargestellten Richtung in den Aufnahmebereich 14 transportiert werden.

Gemäß der gezeigten Ausführungsform werden die Produkte 12 dem Aufnahmebereich 14 in zwei Reihen zugeführt. Grundsätzlich können die Produkte 12 aber auch in nur einer Reihe oder in mehr als zwei Reihen auf der Transportvorrichtung 18 transportiert werden.

Erreichen die Produkte den Aufnahmebereich 14, werden sie von dem Roboter 10 aufgenommen und in dem Ablagebereich 16 abgelegt, in diesem Ausführungsbeispiel in einer Verpackungsmaschine 20, wo sie gemäß einem vorbestimmten Schema zu einem Formatsatz 22 zusammengefügt werden, welcher in diesem Beispiel aus 5 x 4 Produkten 12 gebildet ist. Es versteht sich von selbst, dass die Gestalt des Formatsatzes 22 je nach Anwendung von einer "5 x 4"-Anordnung abweichen kann.

Ist ein Formatsatz 22 komplettiert, wird er aus dem Aktionskreis 10' des Roboters 10 herausbewegt, damit die nachfolgenden Produkte 12 zu einem neuen Formatsatz 22 zusammengesetzt werden können. Auf diese Weise wird ein Formatsatz 22 nach dem anderen fertig gestellt.

Während der Bildung jedes Formatsatzes 22 führt der Roboter 10 eine Reihe von vorbestimmten Umsetzvorgängen 24 aus, die jeweils durch die Paarung von Aufnahmeort und Ablageort eines Produkts 12 definiert sind. Da der Formatsatz 22 im vorliegenden Ausführungsbeispiel 5 x 4 Produkte 12 umfasst, führt der Roboter 10 insgesamt zwanzig unterschiedliche Umsetzvorgänge 24 aus.

Der besseren Übersicht halber sind lediglich zwei von diesen in der Figur dargestellt, nämlich ein erster Umsetzvorgang 24a, bei dem ein Produkt 12 an einem ersten Aufnahmeort 26a aufgenommen und an einem ersten Ablageort 28a abgelegt wird, sowie ein zweiter Umsetzvorgang 24b, bei dem ein Produkt 12 an einem zweiten Aufnahmeort 26b aufgenommen und an einem zweiten Ablageort 28b abgelegt wird.

Zur Erzielung eines möglichst schnellen Umsetzens der Produkte 12 in die Verpackungsmaschine 20 muss der Roboter 10 mit maximaler Geschwindigkeit arbeiten. Um die Lebensdauer des Roboters 10 nicht unnötig zu verkürzen, sind hierbei aber übermäßige kinematische Belastungen des Roboters zu vermeiden. Es gilt also die Geschwindigkeit des Roboters 10 so zu optimieren, dass die einzelnen Umsetzvorgänge 24 mit maximaler Geschwindigkeit ausgeführt werden, ohne dass die Robotermechanik dabei überlastet wird.

Hierzu wird eine Obergrenze für die maximal zulässige kinematische Belastung des Roboters 10 definiert, die bevorzugt so gewählt ist, dass die Lebensdauer des Roboters 10 auch bei regelmäßigem Erreichen der Belastungsobergrenze zumindest nicht wesentlich beeinträchtigt wird. Der Einfachheit halber gilt die Belastungsobergrenze global, d.h. für alle möglichen Umsetzvorgänge 24 des Roboters 10. Grundsätzlich ist es aber auch denkbar, für jeden einzelnen Umsetzvorgang 24 oder zumindest für Gruppen von Umsetzvorgängen 24 unterschiedliche Belastungsobergrenzen zu definieren.

Bei einem Start des Roboters 10 werden die zu dem ersten Formatsatz 22 gehörigen Umsetzvorgänge 24 zunächst jeweils mit einer vergleichsweise langsamen Ausgangsgeschwindigkeit ausgeführt, bei der jedenfalls sichergestellt ist, dass die jeweils resultierenden kinematischen Belastungen der Robotermechanik unterhalb der definierten Belastungsobergrenze liegen.

Während jedes dieser Umsetzvorgänge 24 werden relevante Roboterparameter gemessen, wie beispielsweise die erreichte Maximalgeschwindigkeit eines beweglichen Teils des Roboters 10, z.B. eines Roboterarms, die auftretenden Beschleunigungen des beweglichen Teils, auftretende Drehmomente, die Stromaufnahme eines Antriebs zur Bewegung des beweglichen teils, etc., um daraus die während eines Umsetzvorgangs 24 jeweils auftretende kinematische Belastung der Robotermechanik zu berechnen. Die für jeden Umsetzvorgang 24 ermittelten relevanten Roboterparameter werden abgespeichert, und die berechnete kinematische Belastung wird mit der definierten Belastungsobergrenze verglichen.

Während der nachfolgenden Zyklen, d.h. also während der Bildung der nachfolgenden Formatsätze 22, werden die Geschwindigkeiten, mit denen die einzelnen Umsetzvorgänge 24 ausgeführt werden, sukzessive erhöht, wobei auch hier jeweils die relevanten Roboterparameter erfasst und gespeichert und daraus die entsprechend auftretenden kinematischen Belastungen berechnet werden.

Die Geschwindigkeiten der Umsetzvorgänge 24 werden solange von Formatsatz 22 zu Formatsatz 22, d.h. also von Wiederholung zu Wiederholung, erhöht, bis für jeden der verschiedenen Umsetzvorgänge 24 die ermittelte kinematische Belastung zumindest annähernd die definierte Belastungsobergrenze erreicht bzw. diese zumindest nicht wesentlich überschreitet. Die so erreichten Arbeitsgeschwindigkeiten stellen optimale Arbeitsgeschwindigkeiten dar, bei denen jeder einzelne Umsetzvorgang 24 mit maximaler Geschwindigkeit ausgeführt wird, ohne dass die Robotermechanik dabei übermäßig belastet wird.

Der Roboter 10 stellt sich durch das Durchlaufen einer Lernphase gewissermaßen also selber auf optimale Arbeitsgeschwindigkeiten ein. Dabei ist darauf hinzuweisen, dass die Lernphasen der unterschiedlichen Umsetzvorgänge 24 nicht notwendigerweise gleich lang sein müssen. So ist es durchaus denkbar, dass die optimale Arbeitsgeschwindigkeit für einen Umsetzvorgang 24 schneller erreicht wird als für einen anderen Umsetzvorgang 24. Beispielsweise kann die optimale Arbeitsgeschwindigkeit für den Umsetzvorgang 24a bereits nach vier Formatsätzen 22 erreicht werden, während sie für den Umsetzvorgang 24b erst nach sechs oder sieben Formatsätzen 22 erreicht wird.

### Bezugszeichenliste

- 10: Roboter
- 10': Aktionskreis
- 12: Produkt
- 14: Aufnahmebereich
- 16: Ablagebereich
- 18: Transportvorrichtung
- 19: Transportrichtung
- 20: Verpackungsmaschine
- 22: Formatsatz
- 24: Umsetzvorgang
- 26: Aufnahmeort
- 28: Ablageort

## Patentansprüche

1. Verfahren zur Geschwindigkeitsoptimierung eines Roboters (10), welcher dazu ausgebildet ist, eine Vielzahl von aufeinander folgenden Produktumsetzvorgängen auszuführen, bei denen Produkte (12) aus einem Aufnahmebereich (14) in einen Ablagebereich (16) umgesetzt werden, wobei wenigstens ein erster Umsetzvorgang (24a), bei dem eine erste Art von Produkt (12) an einem ersten vorbestimmten Aufnahmeort (26a) des Aufnahmebereichs (14) aufgenommen und an einem ersten vorbestimmten Ablageort (28a) des Ablagebereichs (16) abgelegt wird, wiederholt ausgeführt wird, bei welchem Verfahren
eine Obergrenze für die zulässige kinematische Belastung des Roboters (10) definiert wird und
die Geschwindigkeit, mit welcher der erste Umsetzvorgang (24a) ausgeführt wird, ausgehend von einer Ausgangsgeschwindigkeit, bei welcher die resultierende kinematische Belastung des Roboters jedenfalls unterhalb der definierten Obergrenze liegt, während einer Lernphase mit jeder Wiederholung des ersten Umsetzvorgangs (24a) bis zu einer optimalen Geschwindigkeit erhöht wird, bei welcher die resultierende kinematische Belastung zumindest annähernd der definierten Obergrenze entspricht.

2. Verfahren nach Anspruch 1,
**dadurch gekennzeichnet, dass**
ein zweiter Umsetzvorgang (24b), bei dem eine zweite Art von Produkt (12) an einem zweiten vorbestimmten Aufnahmeort (26b) des Aufnahmebereichs (14) aufgenommen und an einem zweiten vorbestimmten Ablageort (28b) des Ablagebereichs (16) abgelegt wird, wiederholt ausgeführt wird, wobei die Geschwindigkeit, mit welcher der zweite Umsetzvorgang (24b) ausgeführt wird, ausgehend von einer Ausgangsgeschwindigkeit, bei welcher die resultierende kinematische Belastung des Roboters (10) jedenfalls unterhalb der definierten Obergrenze liegt, während einer Lernphase mit jeder Wiederholung des zweiten Umsetzvorgangs (24b) bis zu einer optimalen Geschwindigkeit erhöht wird, bei welcher die resultierende kinematische Belastung zumindest annähernd der definierten Obergrenze entspricht.

3. Verfahren nach Anspruch 2,
**dadurch gekennzeichnet, dass**
die Erhöhung der Geschwindigkeit, mit welcher der zweite Umsetzvorgang (24b) ausgeführt wird, unabhängig von der Erhöhung der Geschwindigkeit erfolgt, mit welcher der erste Umsetzvorgang (24a) ausgeführt wird.

4. Verfahren nach einem der vorstehenden Ansprüche,
**dadurch gekennzeichnet, dass**
zumindest während der Lernphase eines Umsetzvorgangs (24) die resultierende kinematische Belastung des Roboters ermittelt und mit der definierten Obergrenze verglichen wird.

5. Verfahren nach einem der vorstehenden Ansprüche,
**dadurch gekennzeichnet, dass**
die resultierende kinematische Belastung aus relevanten Roboterparametern ermittelt wird, die während des jeweiligen Umsetzvorgangs (24) erfasst werden.

6. Verfahren nach Anspruch 5,
**dadurch gekennzeichnet, dass**
die relevanten Roboterparameter umfassen: eine Maximalgeschwindigkeit eines zum Umsetzen des Produkts (12) vorgesehenen beweglichen Teils des Roboters (10), eine Beschleunigung des beweglichen Teils, ein zur Bewegung des beweglichen Teils erforderliches Drehmoment und eine Stromaufnahme eines Antriebs zur Bewegung des beweglichen Teils.

7. Verfahren nach Anspruch 5 oder 6,
**dadurch gekennzeichnet, dass**
die während eines Umsetzvorgangs (24) erfassten relevanten Roboterparameter gespeichert werden und zumindest während der Lernphase des Umsetzvorgangs (24) als Grundlage für die Erhöhung der Geschwindigkeit bei der nächsten Wiederholung des Umsetzvorgangs (24) herangezogen werden.

8. Verfahren nach einem der Ansprüche 5 bis 7,
**dadurch gekennzeichnet, dass**
maximal zulässige Grenzwerte für die relevanten Roboterparameter definiert werden, welche bei der Erhöhung der Geschwindigkeit eines Umsetzvorgangs (24) einzuhalten sind.

9. Verfahren nach einem der vorstehenden Ansprüche,
**dadurch gekennzeichnet, dass**
die Geschwindigkeit eines Umsetzvorgangs (24) erhöht wird, indem die Maximalgeschwindigkeit und/oder Beschleunigung eines zum Umsetzen des Produkts (12) vorgesehenen beweglichen Teils des Roboters gemäß einem vorbestimmten Schema erhöht werden bzw. wird.

10. Roboter (10), welcher dazu ausgebildet ist, eine Vielzahl von aufeinander folgenden Produktumsetzvorgängen (24) auszuführen, bei denen Produkte (12) aus einem Aufnahmebereich (14) in einen Ablagebereich (16) umgesetzt werden, wobei wenigstens ein erster Umsetzvorgang (24), bei dem eine erste Art von Produkt (12) an einem ersten vorbestimmten Aufnahmeort (26) des Aufnahmebereichs (14) aufgenommen und an einem ersten vorbestimmten Ablageort (26) des Ablagebereichs (16) abgelegt wird, wiederholt ausgeführt wird, umfassend eine Robotersteuerung, die dazu ausgebildet ist, das Verfahren nach einem der vorherigen Ansprüche auszuführen.
